# EUROPÄISCHE PATENTSCHRIFT

(11) **EP 1 300 368 B1**
(45) Veröffentlichungstag und Bekanntmachung des Hinweises auf die Patenterteilung: **20.10.2004**
(21) Anmeldenummer: 02021391.4
(22) Anmeldetag: 24.09.2002
(51) Int. Cl.: C02F 5/08

(54) **Mittel zur Entfernung von Belägen aus Trinkwasserversorgungseinrichtungen**
Agent for removing deposits from potable water supply utilities
Produit pour l'élimination des entartrages des dispositifs pour distribuer de l'eau potable

(30) Priorität: 04.10.2001 DE 20116242 U
(43) Veröffentlichungstag der Anmeldung: 09.04.2003
(73) Patentinhaber: R. SPÄNE KG, 79618 Rheinfelden (DE)
(72) Erfinder: Späne, Rainer, 79618 Rheinfelden (DE)
(74) Vertreter: Andrae, Steffen, Dr.

(56) Entgegenhaltungen:
- EP-A- 0 819 653
- WO-A-01/42148

## Beschreibung

Die vorliegende Erfindung betrifft ein Natriumdithionit enthaltendes, in trockener Form vorliegendes Mittel zur Entfernung von Belägen (Inkrustationen) aus Trinkwasserversorgungseinrichtungen, insbesondere zur Entfernung von an den Wänden (d.h. den mit Wasser im Kontakt befindlichen Oberflächen) und an technischen Einrichtungen von Trinkwasserbehältern gebildeten oxidischen, in der Regel auch wechselnde Mengen an Biomasse und Biofilmen enthaltenden Belägen, sowie die daraus durch Wasserzugabe erhältlichen Behandlungslösungen.

Es ist bekannt, dass die reduzierend wirkende Verbindung Natriumdithionit (Na₂S₂O₄) in wässriger Lösung unter geeigneten Konzentrations- und pH-Bedingungen in der Lage ist, eisen- und/oder manganoxidhaltige Beläge aufzulösen, was z.B. zur Rostentfernung oder Dekontaminierung von radioaktiven Metalloberflächen genutzt wird. Es ist in diesem Zusammenhang auch schon bekannt, Komplexbildner von Di- und Polyphosphonsäuretyp mitzuverwenden (vgl. z.B. EP 527 908 A1).

Es ist ferner bereits vorgeschlagen worden, dithionithaltige wässige Lösungen zur Entfernung von u.a. eisen- und/oder manganoxidhaltigen Belägen einzusetzen, die sich in Einrichtungen wie z.B. Brunnen bilden, die der Wasserversorgung, insbesondere der Trinkwasserversorgung dienen. Es kann in diesem Zusammenhang verwiesen werden auf DE 33 03 802 A1 und DE 199 53 807 A1, die in erster Linie die Regenerierung von Brunnen betreffen, sowie die WO 01/42148 A1 der Anmelderin.

Im Vergleich zur Entfernung von Rost von Metalloberflächen und Metallteilen gibt es im Bereich der in Trinkwasserversorgungseinrichtungen aus Frischwasser aufgebauten Beläge einige Besonderheiten, die es in der Regel nicht zulassen, zu deren Entfernung bekannte Rostentferner einzusetzen. So ist Trinkwasser ein Lebensmittel, in das keine als gesundheitsschädlich einzustufenden Substanzen eingebracht werden dürfen. Ferner ist die wichtigste Ursache für die Bildung der zu entfernenden Beläge die Lebenstätigkeit von bestimmten spezialisierten Mikroorganismen, die häufig als "Eisenund Manganbakterien" bezeichnet werden. Das führt dazu, dass die zu entfernenden Beläge wechselnde Mengen von organischen Komponenten enthalten können, die die Wirkung von Substanzen, die an sich für eine Oxidauflösung geeignet sind, abschwächen können. Die zur Belagentfernugn verwendeten Mittel dürfen ferner keine größeren Mengen an Substanzen enthalten, die dann, wenn sie in den behandelten Wasserversorgungseinrichtungen zurückbleiben, Nährstoffe für die belagbildenden Mikroorganismen darstellen, da dann die Neubildung der entfernten Beläge begünstigt würde, was den Reinigungserfolg schnell zunichte machen kann. Organische Belagkomponenten, die Nährstoffe für Mikroorganismen darstellen, können ferner eine Vermehrung von solchen Mikroorganismen im Trinkwasserspeicher begünstigen, die gesundheitlich bedenklich sind, so dass das gespeicherte Trinkwasser nicht mehr der Trinkwasserverordnung genügt und für den menschlichen Genuss ungeeignet wird. Schließlich müssen die verwendeten Substanzen unschädlich sein, wenn sie mit dem bei der Reinigung gebildeten Abwasser in die Umwelt gelangen, d.h. sie müssen unschädlich oder unter Umweltbedingungen leicht abbaubar sein, zumal Trinkwasserbehälter in der Regel außerhalb von Ortschaften auf Erhöhungen stehen und oft keinen Kanalisationsanschluß aufweisen.

Bei der Reinigung von Trinkwasserbehältern ergibt sich das zusätzliche Problem, dass diese Behälter, die in der Regel große unterirdische bzw. dunkle Kammern ohne direkten Lichtzutritt und mit beschänktem Luftaustausch sind, dadurch gereinigt werden, dass die Wände nach Ablassen des Behälterinhalts vom Arbeitspersonal mit einer Behandlungslösung besprüht und dann gespült werden. Zur Vermeidung einer gesundheitlichen Gefährdung bzw. Belästigung des Arbeitspersonals dürfen bei der Reinigung - und, soweit sie direkt vor Ort erfolgt, auch bei der Zubereitung der wässrigen Behandlungslösung - keine störenden Mengen von schädlichen, reizenden oder unangenehmen gasförmigen Produkte gebildet werden. Auch hierdurch ergeben sich Einschränkungen, die in der Mehrzahl aller Fälle eine einfache Verwendung von auf anderen Anwendungsgebieten einsetzbaren Belaglösern bei der Entfernung von Belägen aus Trinkwasserversorgungseinrichtungen, insbesondere bei der Trinkwasserbehälterreinigung, ausschließen.

Obwohl der Vorschlag der Verwendung von Natriumdithionit zur Brunnenregenerierung gemäß DE 33 03 802 A1 bereits vor mehr als 15 Jahren gemacht wurde, hat sich ein entsprechendes Verfahren in der Praxis nie etablieren können. Bei dem die Lehre der DE 33 03 802 A1 aufgreifenden Verfahren gemäß DE 199 53 807 A1 zur Brunnenregenerierung ergeben sich in der Praxis ebenfalls Probleme, indem die dort vorgesehene Verwendung von Komplexbildnern auf der Basis von Hydroxycarbonsäureverbindungen dazu führt, dass der Erfolg von Brunnenregenerierungen durch eine schnelle Neuverkeimung bzw. Neubildung der Beläge in den Brunnen zu rasch zunichte gemacht werden kann, d.h. die Regenerierung ist nicht nachhaltig genug. Eine einfache Übertragung von Verfahren der Brunnenregenerierung auf die Behälterreinigung ist wegen der bei letzterer auftretenden, oben genannten zusätzlichen Probleme nicht ohne weiteres möglich.

Einer Durchsetzung der Verwendung von Natriumdithionit als Mittel (oder als wesentlicher Bestandteil von Mitteln) zur Belagentfernung im Bereich der Trinkwasserversorgungseinrichtungen haben vermutlich auch einige Eigenschaften des Produkts Natriumdithionit selbst im Wege gestanden. Natriumdithionit ist ein weißes, die Atemwege und Augen reizendes Pulver. Produkte, die hohe Mengen an Dithionit enthalten, sind daher nach der Gefahrenstoffverordnung kennzeichnungspflichtig (Symbol "Gesundheitsschädlich"). In wässriger Lösung und als Dihydrat zersetzt es sich leicht zu Natriumthiosulfat und Natriumsulfit. Bei einer Lagerung in Gegenwart von Feuchtigkeit neigt es zu einer Selbstentzündung. Um eine vorzeitige Zersetzung zu vermeiden, ist das wasserfreie Natriumdithionit daher trocken, d.h. in Metallfässern und feuchtigkeitsundurchlässigen Kunststoffbehältern, gut verschlossen und kühl aufzubewahren. Für eine dezentralen Verwendung am jeweiligen Einsatzort einer Belagentfernung ergeben sich aus den genannten Gründen erhebliche praktische Probleme was die Bereitstellung, den Transport, die Verwendung vor Ort und auch den Umgang mit angebrochenen Gebinden betrifft.

Es ist Aufgabe der vorliegenden Erfindung, ein unter Einsatzbedingungen problemlos verwendbares Mittel zur Bereitung einer Dithionit enthaltenden Behandlungslösung für die Entfernung von Belägen aus Wasserversorgungseinrichtungen anzugeben, das eine Behandlungslösung ergibt, die im Hinblick auf die Belagentfernung hochwirksam ist, bei ihrer Verwendung auch auf dem Gebiet der Behälterreinigung zu keiner problematischen Belastung des Arbeitspersonals mit gesundheitsschädlichen und/oder unangenehmen Gasen führt und bei der Abgabe der verbrauchten Behandlungslösung nach der Reinigung in die Umwelt keine Umweltprobleme verursacht.

Diese Aufgabe wird durch ein Mittel gemäß Anspruch 1 gelöst. Vorteilhafte bzw. bevorzugte Ausgestaltungen des Mittels gemäß Anspruch 1 sind in den Unteransprüchen 2 bis 7 angegeben. Die Erfindung betrifft außerdem eine Behandlungslösung, die durch Auflösen des Mittels gemäß den Ansprüchen 1 bis 7 in Wasser erhältlich ist.

Nachfolgend werden das Mittel, die Bedeutung seiner einzelnen Bestandteile, die Vorteile der daraus erhältlichen wäßrigen Behandlungslösungen sowie seine bevorzugte Verwendung noch ergänzend näher erläutert.

Als ersten wesentlichen Wirkbestandteil enthält das Mittel ein Alkalidithionit, insbesondere Natriumdithionit, in Mengen von weniger als 50 Gew.-%, vorzugsweise weniger als 25 Gew.-%, wobei zur Erzielung der gewünschten Wirksamkeit die Mindestmengen bei etwa 10 Gew.-% liegen sollten. Natriumdithionit wirkt als Reduktionsmittel und überführt wasserunlösliche dreiwertige Eisen- sowie drei- und vierwertige Manganverbindungen (insbesondere Oxide, Oxidhydrate und Hydroxide) in entsprechende lösliche zweiwertige Ionenverbindungen. Natriumdithionit ist ein kennzeichenpflichtiger Gefahrstoff, wenn seine Mengen höher als 25 Gew.-% liegen. In darunter liegenden Anteilen sind entsprechende Produkte kennzeichnungsfrei. Neben seiner reduktiv-lösenden Wirkung haben Natriumdithionit und das bei seiner Anwendung gebildete Oxidationsprodukt Natriumhydrogensulfit desinfizierende Wirkungen, was zur Vermeidung einer Neuverkeimung und Belagneubildung erwünscht ist.

Als weiteren wirkungsrelevanten Bestandteil enthält das Mittel in Mengen von 4-40 Gew.-%, vorzugsweise von 2-25 Gew.-%, einen Komplexbildner vom Phosphonsäuretyp, insbesondere eine Metallionen komplexierende Verbindung mit mehreren Phosphonsäure- und/oder Carbonsäuregruppen, besonders bevorzugt die Verbindung 2-Phosphonobutan-1,2,4-tricarbonsäure in Form ihres Tetranatriumsalzes (PBTC-Na₄; Handelsbezeichnung Bayhibit S). Diese Verbindung wirkt als Komplexierungsmittel und hält die bei der Belagauflösung/Reduktion gebildeten zweiwertigen Eisen- und Manganionen in Lösung und schützt sie vor einer Reoxidation

PBTC-Na₄ (im folgenden nur noch PBTC) ist der mengenmäßig größte organische Bestandteil des Mittels. PBTC wird im Dunkeln, d.h. z.B. in unterirdischen bzw. den dunklen, gegen einen Lichtzutritt geschützten Trinkwasserbehältern und den zugehörigen Rohrleitungssystemen, nur sehr langsam abgebaut und stellt keine Nahrungsgrundlage für Mikroorganismen dar. Es fördert also in den behandelten Wasserversorgungseinrichtungen nicht die Neuverkeimung, und die Wiederverkeimungsgefahr ist im Gegensatz zu Mitteln, die Komplexbildner vom Hydroxycarbonsäuretyp wie z.B. Citrate oder andere organische Säuren wie z.B. Ascorbate enthalten, sehr gering.

Unter Lichteinfluss wird PBTC in wässrigen Medien jedoch abgebaut, so dass es sich in der Umwelt nicht anreichert. In Kläranlagen wird PBTC zu 95% an Klärschlamm adsorbiert, im Boden biologisch abgebaut. Das Komplexierungsvermögen ist im Vergleich zu anderen Komplexbildnern eher geringer, so dass PBTC keine Schwermetalle aus Sedimenten mobilisiert. In dem erfindungsgemäßen Mittel erfüllt PBTC den gewünschten Zweck, ohne unter den Einsatzbedingungen die Wiederverkeimung zu fördern, und das bei gleichzeitig ausgewogenen sonstigen Eigenschaften, insbesondere was seine Umweltverträglichkeit bzw. Abbaubarkeit bei Zutritt von Tageslicht angeht.

Der Metaphosphatbestandteil, insbesondere in Form des sog. Grahamschen Salzes (ein wasserlösliches Natriummetaphosphat), wird in Mengen von 1-20 Gew.-%, vorzugsweise 3-10 Gew.-%, verwendet und wirkt ebenfalls komplexierend und unterstützt die Wirkung des PBTC und gestattet eine gewisse Verminderung von dessen Anteil. Es ist ferner in der Lage, auch geringe Kalkmengen zu lösen und in Lösung zu halten. Es fördert dadurch die Lösung von kalkhaltigen Belägen.

Das Alkalihydrogencarbonat, vorzugsweise Natriumhydrogencarbonat, verwendet in Menge von 5-20 Gew.-%, vorzugsweise von 7-18 Gew.-%, stabilisiert den pH-Wert der Behandlungslösung. Es wirkt als Puffer einer Absenkung des pH-Werts aufgrund einer Luftoxidation des Natriumdithionits entgegen. Bei erniedrigten pH-Werten zersetzt sich Natriumdithionit nämlich unter Freisetzung von giftigem und geruchsbelästigendem Schwefeldioxid. Das Alkalihydrogencarbonat hält den pH-Wert stabil und verhindert die Entstehung von SO₂, was bei der Behälterreinigung von großer Bedeutung ist.

Die als weitere Bestandteile vorhandenen wasserlöslichen Salze von Mineralsäuren, insbesondere Alkalisalze der starken Mineralsäuren wie insbesondere Salzsäure und Schwefelsäure, bilden zusammen bis zu 80 Gew.-% der Zusammensetzung des Mittels. Ein geeignetes Salz ist Kaliumchlorid, das in Mengen von 10-60 Gew.-% verwendet werden kann. Es kann auch eine Mischung von zwei verschiedenen löslichen Salzen verwendet, z.B. von wasserfreiem Natriumsulfat, das in Mengen von 10 bis 60 Gew.-% verwendet werden kann, z.B. von 10 bis 30 Gew.-%, einerseits, und von Kaliumchlorid, das im wesentlichen in Mengen der gleichen Größenordnung verwendet werden kann. Die Salze wirken in erster Linie als wasserlösliche Füllstoffe, wobei Natriumsulfat ggf. den zusätzlichen Vorteil aufweist, Feuchtigkeit zu binden und damit die Stabiliät des Mittels zu erhöhen. Es verhindert auch die Klumpenbildung und bewahrt die Rieselfähigkeit des festen rieselfähigen Mittels. Kaliumchorid unterstützt aufgrund seiner sehr guten Wasserlöslichkeit die schnelle Auflösung des festen erfindungsgemäßen Mittels in Wasser.

Um mit dem Mittel auch eventuell vorhandene organische Belagbestandteile leichter aufzulösen, z.B. die bakteriellen Schleimbeläge (Exopolysaccharide), enthält das Mittel in einer bevorzugten Ausführungsform zusätzlich geeignete, organische Substrate abbauende Enzyme, insbesondere solche von Hydrolasetyp, und zwar in Mengen von etwa 0,01 bis 1 Gew.-% je Enzym, bezogen auf die Gesamtmischung der anderen genannten Bestandteile des Mittels. Die zugesetzten Enzyme wirken als Aufschlussmittel für die Biomasseanteile der zu entfernenden Ablagerungen und können z.B. zu den Proteasen, Lipasen, Cellulasen und/oder Amylasen gehören.

Das erfindungsgemäße Mittel ist ein festes, rieselfähiges Produkt für die Trinkwasserbehälterreinigung, das sich gut in den erforderlichen Wassermengen lösen läßt. Dabei werden vorzugsweise 1 kg des trockenen Mittels in 5 l Wasser gelöst. Auf Wunsch können natürlich auch höhere Verdünnungen gewählt werden. In Form der erhaltenen wässrigen Behandlungslösung kann es in der üblichen Weise zur Lösung von Belägen auf den Wänden, einschließlich der Bodenflächen und anderer mit dem Wasser in Kontakt stehenden Flächen, und auf technischen Einrichtungen in Trinkwasserbehältern versprüht werden. Durch Nachwaschen mit Wasser werden Reste und Abbauprodukte und gelöste Substanzen ohne Probleme entfernt.

Als Reinigungsmittelkonzentrat ist das Mittel einfach, sicher und ohne übermäßige Transportkosten zum jeweiligen Anwendungsort zu transportieren, wo man daraus die benötigte Behandlungslösung herstellen kann. Bei Natriumdithionitgehalten von weniger als 25 Gew.-% ist das Mittel außerdem kennzeichnungsfrei. Als neutrales Produkt ist es für alle Trinkwasserbehälteroberflächen, auch säureempfindliche, geeignet.

Bei seiner Verwendung kommt es überraschenderweise zu keiner nennenswerten Geruchsbelästigung, und aufgrund der Abbaubarkeit von PBTC unter Lichteinwirkung führt es zu keinen unerwünschten Umweltbelastungen durch organische Wirkstoffe. Die Oxidationsprodukte des Natriumdithionits sind ebenfalls unschädlich, und Reste von Dithionit können gewünschtenfalls auf einfache Weise unschädlich gemacht werden.

Ein weiterer Vorteil liegt darin, dass das erfindungsgemäße Reinigungsmittel für mineralische Beschichtungen von Trinkwasserbehältern besonders geeignet ist. Es wirkt sehr gut, ohne mineralische Beschichtungen anzugreifen, während derartige Beschichtungen bei einer Verwendung anderer, insbesondere saurer, Reinigungsmittel stets in einem gewissen Grad korrosiv angegriffen werden.

## Patentansprüche

1. Mittel für die Entfernung von Belägen aus Trinkwasserversorgungseinrichtungen, insbesondere zur Entfernung von an den mit Wasser in Kontakt stehend Oberflächen von Trinkwasserbehältern gebildeten Belägen, **gekennzeichnet durch** die folgenden Bestandteile (in Gew.-%):
| | | |
|---|---|---|
| a. | Alkalidithionit | 10 - 50 % |
| b. | Komplexbildner vom Phosphonoalkancarbonsäuretyp | 4 - 40 % |
| c. | Metaphosphat | 1 - 20 % |
| c. | Alkalihydrogencarbonat | 5 - 20 % |
| d. | wasserlösliche Alkalisalze von Mineralsäuren | 20 - 80 %. |

2. Mittel nach Anspruch 1, **dadurch gekennzeichnet, dass** es die folgende Zusammensetzung aufweist:
| | | |
|---|---|---|
| a. | Natriumdithionit | 10 - 50 % |
| b. | 2-Phosphonobutan-1,2,4-tricarbonsäure-tetranatriumsalz (PBTC-Na₄) | 4 - 40 % |
| c. | Grahamsches Salz | 1 - 20 % |
| d. | Natriumhydrogencarbonat | 5 - 20 % |
| e₁. | Natriumsulfat | 0 - 60 % |
| e₂. | Kaliumchlorid | 10 - 60 %. |

3. Mittel nach Anspruch 2, **dadurch gekennzeichnet, dass** es die folgende Zusammensetzung aufweist:
| | | |
|---|---|---|
| a. | Natriumdithionit | 10 - 25 % |
| b. | PBTC-Na ₄ | 5 - 25 % |
| c. | Grahamsches Salz | 3 - 10 % |
| d. | Natriumhydrogencarbonat | 7 - 18 % |
| e₁. | Natriumsulfat | 0 - 30 % |
| e₂. | Kaliumchlorid | 10 - 50 %. |

4. Mittel nach einem der Ansprüche 1 bis 3, **dadurch gekennzeichnet, dass** es in Form einer rieselfähigen Feststoffmischung vorliegt.

5. Mittel nach einem der Ansprüche 1 bis 4, **dadurch gekennzeichnet, dass** es zusätzlich organische Substrate abbauende Enzyme, insbesondere Hydrolasen, enthält.

6. Mittel nach Anspruch 5, **dadurch gekennzeichnet, dass** die Enzyme ausgewählt sind aus Amylasen, Proteasen, Cellulasen und/oder Lipasen.

7. Mittel nach Anspruch 5 oder 6, **dadurch gekennzeichnet, dass** jedes vorhandene Enzym in einer zusätzlichen Menge, bezogen auf die Gesamtmenge der Bestandteile gemäß den Ansprüchen 1 bis 4, von 0,01 bis 1 % vorhanden ist.

8. Wässrige Behandlungslösung zur Entfernung von Belägen von den mit Wasser in Kontakt befindlichen Oberflächen von Trinkwasserbehältern und von Gerätschaften und technischen Einrichtungen aus Trinkwasserbehältern durch Aufbringen einer Behandlungslösung, **dadurch gekennzeichnet, dass** die Behandlungslösung durch Auflösen eines Mittels nach einem der Ansprüche 1 bis 7 in Wasser erhältlich ist.

9. Wässrige Behandlungslösung nach Anspruch 8, erhältlich durch Auflösen von 1 kg des Mittels nach einem der Ansprüche 1 bis 7 in mindestens etwa 5 kg Wasser.

10. Verfahren zur Entfernung von Belägen aus Trinkwasserversorgungseinrichtungen, insbesondere zur Entfernung von an den mit Wasser in Kontakt stehend Oberflächen von Trinkwasserbehältern gebildeten Belägen, **dadurch gekennzeichnet, dass** man eine wässrige Behandlungslösung nach einem der Ansprüche 8 oder 9 mit den zu behandelnden Oberflächen für eine zur Belaglösung ausreichende Zeit in Kontakt bringt.

11. Verfahren nach Anspruch 10, **dadurch gekennzeichnet, dass** man die wässrige Behandlungslösung aufsprüht und nach der jeweiligen Einwirkungszeit die behandelten Oberflächen mit Wasser nachspühlt.

## Claims

1. Agent for removing deposits from potable water supply utilities, in particular for removing deposits formed on those surfaces of potable water containers which are in contact with water, **characterized by** the following components (in % by weight):
| | | |
|---|---|---|
| a. | Alkali metal dithionite | 10 - 50% |
| b. | Complexing agent of the phosphonoalkanecarboxylic acid type | 4 - 40% |
| c. | Metaphosphate | 1 - 20% |
| d. | Alkali metal bicarbonate | 5 - 20% |
| e. | Water-soluble alkali metal salts of mineral acids | 20 - 80%. |

2. Agent according to Claim 1, **characterized in that** it has the following composition:
| | | |
|---|---|---|
| a. | Sodium dithionite | 10 - 50% |
| b. | 2-Phosphonobutane-1,2,4-tricarboxylic acid tetrasodium salt (PBTC-Na₄) | 4 - 40% |
| c. | Graham's salt | 1 - 20% |
| d. | Sodium bicarbonate | 5 - 20% |
| e₁. | Sodium sulphate | 0 - 60% |
| e₂. | Potassium chloride | 10 - 60%. |

3. Agent according to Claim 2, **characterized in that** it has the following composition:
| | | |
|---|---|---|
| a. | Sodium dithionite | 10 - 25% |
| b. | PBTC-Na₄ | 5 - 25% |
| c. | Graham's salt | 3 - 10% |
| d. | Sodium bicarbonate | 7 - 18% |
| e₁. | Sodium sulphate | 0 - 30% |
| e₂. | Potassium chloride | 10 - 50%. |

4. Agent according to any of Claims 1 to 3,
**characterized in that** it is present in the form of a flowable mixture of solids.

5. Agent according to any of Claims 1 to 4, **characterized in that** it additionally contains enzymes degrading organic substrates, in particular hydrolases.

6. Agent according to Claim 5, **characterized in that** the enzymes are selected from amylases, proteases, cellulases and/or lipases.

7. Agent according to Claim 5 or 6, **characterized in that** each enzyme present is present in an additional amount, based on the total amount of the components according to any of Claims 1 to 4, of 0.01 to 1%.

8. Aqueous treatment solution for removing deposits from those surfaces of potable water containers which are in contact with water and from apparatuses and technical equipment from potable water containers by applying a treatment solution, **characterized in that** the treatment solution is obtainable by dissolving an agent according to any of Claims 1 to 7 in water.

9. Aqueous treatment solution according to Claim 8, obtainable by dissolving 1 kg of the agent according to any of Claims 1 to 7 in at least about 5 kg of water.

10. Method for removing deposits from potable water supply utilities, in particular for removing deposits found on those surfaces of potable water containers which are in contact with water, **characterized in that** an aqueous treatment solution according to either of Claims 8 and 9 is brought into contact with the surfaces to be treated for a time sufficient for dissolving the deposits.

11. Method according to Claim 10, **characterized in that** the aqueous treatment solution is sprayed on and, after the respective contact time, the treated surfaces are rinsed with water.

## Revendications

1. Agent d'enlèvement des incrustations dans des installations d'alimentation en eau potable, en particulier pour l'enlèvement d'incrustations formées sur les surfaces de réservoirs d'eau potable en contact avec l'eau, **caractérisé par** les composants suivants (en % en poids) :
| | | |
|---|---|---|
| a. | Dithionite de métal alcalin | 10 - 50% |
| b. | Agent complexant du type acide phosphonoalcane carboxylique | 4 - 40% |
| c. | Métaphosphate | 1 - 20% |
| d. | Hydrogénocarbonate de métal alcalin | 5 - 20% |
| e. | Sels solubles dans l'eau d'acides minéraux et de métal alcalin | 20 - 80% |

2. Agent selon la revendication 1, **caractérisé en ce qu'**il présente la composition suivante :
| | | |
|---|---|---|
| a. | Dithionite de sodium | 10 - 50% |
| b. | Sel tétrasodium de l'acide 2-phosphonobutane-1,2,4-tricarboxylique (PBTC-Na₄) | 4 - 40% |
| c. | Sel de Graham | 1 - 20% |
| d. | Hydrogénocarbonate de sodium | 5 - 20% |
| e₁. | Sulfate de sodium | 0 - 60% |
| e₂. | Chlorure de potassium | 10 - 60% |

3. Agent selon la revendication 2, **caractérisé en ce qu'**il présente la composition suivante :
| | | |
|---|---|---|
| a. | Dithionite de sodium | 10 - 25% |
| b. | PBTC-Na₄ | 5 - 25% |
| c. | Sel de Graham | 3 - 10% |
| d. | Hydrogénocarbonate de sodium | 7 - 18% |
| e₁. | Sulfate de sodium | 0 - 30% |
| e₂. | Chlorure de potassium | 10 - 50% |

4. Agent selon l'une des revendications 1 à 3,
**caractérisé en ce qu'**il se présente sous la forme d'un mélange de solides apte à s'écouler.

5. Agent selon l'une des revendications 1 à 4, **caractérisé en ce qu'**il contient en supplément des enzymes, en particulier des hydrolases, qui décomposent les substrats organiques.

6. Agent selon la revendication 5, **caractérisé en ce que** les enzymes sont sélectionnés parmi les amylases, les protéases, les cellulases et/ou les lipases.

7. Agent selon la revendication 5 ou 6, **caractérisé en ce que** chaque enzyme est présente en quantité supplémentaire de 0,01 à 1% par rapport à la quantité totale des composants des revendications 1 à 4.

8. Solution aqueuse de traitement pour l'enlèvement d'incrustations de surfaces en contact avec l'eau dans des réservoirs d'eau potable, des appareillages et des installations techniques de réservoirs d'eau potable, par application d'une solution de traitement, **caractérisée en ce que** la solution de traitement peut être obtenue en dissolvant dans l'eau un agent selon l'une des revendications 1 à 7.

9. Solution aqueuse de traitement selon la revendication 8, que l'on peut obtenir en dissolvant 1 kg de l'agent selon l'une des revendications 1 à 7 dans au moins environ 5 kg d'eau.

10. Procédé d'enlèvement d'incrustations dans des installations d'alimentation en eau potable, et en particulier pour enlever des incrustations formées sur les surfaces de réservoirs d'eau potable en contact avec l'eau, **caractérisé en ce que** l'on met en contact une solution aqueuse de traitement selon l'une des revendications 8 ou 9 avec les surfaces à traiter pendant une durée suffisante pour dissoudre les incrustations.

11. Procédé selon la revendication 10, **caractérisé en ce que** l'on pulvérise la solution aqueuse de traitement et qu'après le temps d'action nécessaire, on rince les surfaces traitées à l'eau.
